Europäisches Patentamt

European Patent Office

Office européen des brevets

(19)

(11) Veröffentlichungsnummer: **0 111 672**
**B1**

(12) # EUROPÄISCHE PATENTSCHRIFT

(45) Veröffentlichungstag der Patentschrift:
24.08.88

(51) Int. Cl.⁴: **B 60 T 17/22**

(21) Anmeldenummer: 83110362.7

(22) Anmeldetag: 18.10.83

(54) **Hydraulisches Fahrzeugbremssystem.**

(30) Priorität: 20.11.82 DE 3243019

(43) Veröffentlichungstag der Anmeldung:
27.06.84 Patentblatt 84/26

(45) Bekanntmachung des Hinweises auf die Patenterteilung:
24.08.88 Patentblatt 88/34

(84) Benannte Vertragsstaaten:
AT DE FR GB SE

(56) Entgegenhaltungen:
DE - A - 3 040 561
FR - A - 1 544 007
FR - A - 2 450 185
GB - A - 2 022 738
US - A - 4 046 426
US - A - 4 046 426
US - A - 4 166 654

(73) Patentinhaber: ROBERT BOSCH GMBH, Postfach 50,
D-7000 Stuttgart 1 (DE)

(72) Erfinder: Leiber, Heinz, Theodor-Heuss-Strasse 34,
D-7141 Oberriexingen (DE)

## Beschreibung

Die Erfindung betrifft ein hydraulisches Fahrzeugbremssystem gemäss dem Oberbegriff des Anspruchs 1.

Bei Bremssystemen mit Regelung des Bremsdrucks bei Blockierneigung und Verwendung wenigstens eines Hauptbremszylinders, also wenigstens eines statischen Bremskreises, ist es neben der Anwendung des Rückförderprinzips für das ausgelassene Druckmittel bei Druckabsenkung bekannt, das Druckmittel direkt einem drucklosen Vorratsbehälter zuzuführen und zur Vermeidung der Erschöpfung des Druckmittels im statischen Bremskreis im Regelfall ein Fremdenergieversorgungssystem bestehend aus Pumpe und Druckspeicher an die Bremsdrucksteuerventile anzuschliessen. Bei aus der DE-A-1 655 448 oder der DE-A-3 040 548 bekannten Bremssystemen wird dieses Versorgungssystem im Regelfall anstelle des Hauptbremszylinders mit den Druckregelventilen verbunden, bei anderen Systemen z.B. gemäss der DE-A-3 040 561 wird im Regelfall in den Hauptbremszylindern der Druck des Versorgungssystems eingespeist. Es ist dabei möglich, das Versorgungssystem nur für die Einspeisung beim Regeln vorzusehen, jedoch wird vorzugsweise dieses Versorgungssystem zusätzlich zur Bremskraftverstärkung herangezogen.

Der Erfindung liegt die Aufgabe zugrunde, Bremssysteme der eingangs geschilderten Art, dahingehend zu verbessern, dass auch bei einem Fehler an der Ventilanordnung, die das Fremdversorgungssystem anschaltet, sichergestellt ist, dass die Bremsflüssigkeit nicht aufgebraucht wird.

Diese Aufgabe wird durch die im Anspruch 1 angegebenen Merkmale gelöst.

Es ist zwar schon eine Lösung der gestellten Aufgabe aus der DE-A-3 040 540 bekannt. Dort ist ein Sperrventil vorgesehen, das nach einer gegebenen Auslenkung eines Positionierungskolbens mechanisch freigegeben wird und die Rücklaufleitung verschliesst, so dass ein Durchfallen des Hauptbremszylinderkolbens vermieden wird. Diese Lösung ist aufwendig.

Anhand der Zeichnung wird ein Ausführungsbeispiel der Erfindung erläutert. Es zeigen

Fig. 1 eine Prinzipdarstellung eines derartigen Bremssystems,

Fig. 2 eine Darstellung der Ansteuerschaltung für die Bremsdrucksteuerventile.

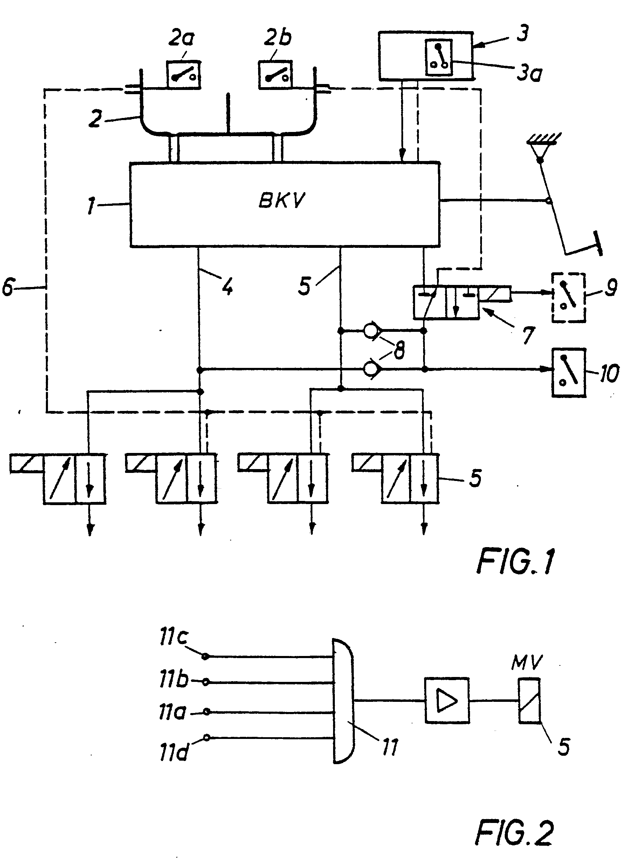

In Fig. 1 ist mit 1 ein Bremskraftverstärker bezeichnet, der z.B. wie der Bremskraftverstärker der DE-A-3 040 548 oder 3 040 561 aufgebaut sein kann. Diesem Bremskraftverstärker 1 ist ein geteilter Vorratsbehälter 2 mit zwei Füllstandsanzeigern 2a und 2b zugeordnet, sowie eine Druckversorgung 3, die einen Druckschalter 3a aufweist, der ab einem vorgegebenen Druckwert ein Schaltsignal abgibt. Die beiden Ausgänge 4 und 5 der Hauptbremszylinder des Bremskraftverstärkers sind mit hier als 3/2 Ventile dargestellten Antiblokkierregelventilen 5 verbunden, deren Ausgänge mit nicht gezeigten Radbremszylindern verbunden sind. In der zweiten Stellung verbinden die Ventile 5 die Radbremszylinder mit einer Rücklaufleitung 6. Bei dem gezeigten Ausführungsbeispiel ist die Druckversorgung 3 über den Bremskraftverstärker 1 mit einem Einspeiseventil 7 verbunden, das hier als 3/2 Ventil ausgebildet ist und in der gezeigten Stellung seinen Ausgang mit dem Vorratsbehälter 2 verbindet, jedoch in seiner zweiten Stellung die Druckversorgung 3 über Rückschaltventile 8 mit den Antiblockierventilen 5 verbindet. Im gezeigten Ausführungsbeispiel ist dem Einspeiseventil 7 ein Schalter 9 zugeordnet, der bei Umschaltung des Ventils 7 in seine zweite Stellung ein Signal abgibt. Anstelle dieses Positionsschalters 9 kann auch ein Druckschalter 10 verwendet werden der ein Signal abgibt, wenn ein Druck vorgegebener Grösse überschritten ist.

Die Umsteuerung des Einspeiseventils 7 in die zweite Stellung erfolgt, sobald die Regelung an wenigstens einem Rad einsetzt. Die Ansteuerung der einzelnen Antiblockierventile 5 erfolgt gemäss Fig. 2 über je ein Und-Gatter 11, dem an der Klemme 11a das Signal für die Ansteuerung des Ventils 5 bei Blockierneigung zugeführt wird und dem an der Klemme 11b das Signal des Positionsschalters 7 oder des Druckschalters 10 zugeführt wird.

Hieraus ergibt sich folgende Wirkungsweise. Bei einer normalen Bremsung werden die Bremsen von den Hauptbremszylindern über die Leitungen 4 und 5 mit Druck beaufschlagt. Kommt es zur Regelung des Bremsdrucks, so wird das Einspeiseventil 7 in seine zweite Stellung gebracht. Mit dieser Umschaltung gibt der Positionsgeber 9 (oder der Druckschalter 10) in Signal ab und das entsprechende Ventil 5 wird über das Und-Gatter 11 angesteuert. Hat das Einspeiseventil 7 bei Regelbeginn jedoch nicht umgeschaltet, so würde bei erfolgender Regelung das Druckmittel der einzelnen Bremskreise bis zur Erschöpfung aufgebraucht werden und es würde zu einem Ausfall der Bremse kommen. Durch die Verwendung des Positionsgebers 9 (oder Druckschalters 10) wird jedoch bei Nichtansprechen des Ventils 7 eine Regelung verhindert, da der Positionsgeber das Und-Gatter 11 sperrt. Damit ist sichergestellt, dass die Funktion der normalen Bremse erhalten bleibt.

An der Klemme 11c kann der Druckschalter 3a angeschaltet sein, so dass auch bei Ausfall die Druckversorgung 3 das Gatter 11 gesperrt wird. Über Klemme 11d kann zusätzlich das Gatter 11 gesperrt werden, wenn das Druckmittel im Reservoir 2 für den entsprechenden Bremskreis unter einen vorgegebenen Wert sinkt und deshalb einer der Niveauschalter 2a oder 2b ein Signal abgibt.

## Patentansprüche

1. Hydraulisches Fahrzeugbremssystem enthaltend wenigstens einen statischen Bremskreis mit Hauptbremszylinder, dessen Kolben mittels des Bremspedals direkt oder indirekt betätigt wird, wenigstens ein Bremsdrucksteuerventil zwischen dem wenigstens einen Hauptbremszylinder und einem Radbremszylinder, das bei Blockiernei-

gung zwecks Druckregelung betätigt wird, eine Rücklaufleitung in einen Vorratsbehälter für das von dem wenigstens einen Bremsdrucksteuerventil abgelassene Druckmittel, ein Fremdenergieversorgungssystem und eine Ventilanordnung, die im Falle einer Regelung des Bremsdrucks aufgrund einer Blockiergefahr das Fremdenergieversorgungssystem an das wenigstens eine Bremsdrucksteuerventil anschaltet, dadurch gekennzeichnet, dass der Ventilanordnung (7) eine Überwachungseinrichtung (9, 10) zugeordnet ist, die eine Signaländerung bewirkt, wenn die Ventilanordnung (7) durchgeschaltet hat und dass in die Ansteuerung des wenigstens einen Bremsdrucksteuerventils (5) eine Sperrschaltung (11) eingeschaltet ist, die mit der Überwachungseinrichtung (9, 10) derart verbunden ist, dass zumindest eine Steuerung des Bremsdruckregelventils (5) in die Stellung Druckabbau verhindert wird, solange die Ventilanordnung (7) nicht durchgeschaltet hat.

2. Hydraulisches Fahrzeugbremssystem nach Anspruch 1, dadurch gekennzeichnet, dass der Ventilanordnung (7) als Überwachungseinrichtung ein Druckschalter (10) nachgeschaltet ist, der bei einem vorgegebenen Druck die Signaländerung erzeugt und dass zwischen dem Anschaltpunkt des Druckschalters (10) und dem wenigstens einen Bremsdrucksteuerventil (5) wenigstens ein Einrichtungsventil (8), das die Zuführung von Druckmittel von der Ventilanordnung (7) zu dem Bremsdrucksteuerventil (5) erlaubt, eingeschaltet ist.

3. Hydraulisches Fahrzeugbremssystem nach Anspruch 1, dadurch gekennzeichnet, dass der Ventilanordnung (7) als Überwachungseinrichtung ein Positionsschaltr (9) zugeordnet ist.

4. Hydraulisches Fahrzeugbremssystem nach einem der Ansprüche 1 bis 3, dadurch gekennzeichnet, dass die Ventilanordnung (7) ein 3/2-Ventil ist, das in der Ausgangsstellung seinen Ausgang mit dem Vorratsbehälter (2) verbindet.

5. Hydraulisches Fahrzeugbremssystem nach einem der Ansprüche 1 bis 4, dadurch gekennzeichnet, dass die Sperrschaltung (11) zusätzlich mit einem Füllstandsanzeiger (2a oder 2b) des Vorratsbehälters (2) verbunden ist, zur Sperrung der Sperrschaltung (11) bei Absinken des Füllstands des Vorratsbehälters (2) unter einem vorgegebenen Wert.

6. Hydraulisches Fahrzeugbremssystem nach einem der Ansprüche 1 bis 5, dadurch gekennzeichnet, dass dem Fremdkraftversorgungssystem (3) ein Druckschalter (3a) zugeordnet ist, der mit der Sperrschaltung (11) verbunden ist zu deren Sperrung bei nicht ausreichender Druckerzeugung.

**Claims**

1. Vehicle hydraulic brake system containing at least one static brake circuit with main brake cylinder, whose piston is actuated directly or indirectly by means of the brake pedal, containing at least one brake pressure control valve between the at least one main brake cylinder and a wheel brake cylinder, which valve is actuated by means of pressure control in the event of a tendency to lock, containing a return line into a reservoir for the pressure medium drained from the at least one brake pressure control valve and containing an external energy supply system and a valve arrangement which, in the case of a control of the brake pressure due to a danger of locking, switches the external energy supply system to the at least one brake pressure control valve, characterized in that the valve arrangement (7) is associated with a monitoring device (9, 10) which causes a change in signal when the valve arrangement (7) is switched through and that a blocking circuit (11) is switched into the triggering of the at least one brake pressure control valve (5), which blocking circuit is connected to the monitoring device (9, 10) in such a way that at least a control of the brake pressure control valve (5) into the pressure reduction position is prevented as long as the valve arrangement (7) is not switched through.

2. Vehicle hydraulic brake system according to Claim 1, characterized in that the valve arrangement (7) is connected, as a monitoring device, downstream of a pressure switch (10) which generates the signal change at a specified pressure and that at least one unidirectional valve (8), which permits the supply of pressure medium from the valve arrangement (7) to the brake pressure control valve (5), is connected between the connecting point of the pressure switch (10) and the at least one brake pressure control valve (5).

3. Vehicle hydraulic brake system according to Claim 1, characterized in that the valve arrangement (7), as the monitoring device, is associated with a position switch (9).

4. Vehicle hydraulic brake system according to one of the Claims 1 to 3, characterized in that the valve arrangement (7) is a 3/2 valve which, in the initial position, connects its output to the reservoir (2).

5. Vehicle hydraulic brake system according to one of the Claims 1 to 4, characterized in that the blocking circuit (11) is additionally connected to a level indicator (2a or 2b) of the reservoir (2) in order to block the blocking circuit (11) when the level in the reservoir (2) sinks below a specified value.

6. Vehicle hydraulic brake system according to one of the Claims 1 to 5, characterized in that the external force supply system (3) is associated with the pressure switch (3a), which is connected to the blocking circuit (11) in order to block it when the pressure generated is inadequate.

**Revendications**

1. Système de freinage hydraulique de véhicule comprenant au moins un circuit de freinage statique avec un maître-cylindre, dont le piston est actionné directement ou bien indirectement, au moyen de la pédale de frein, comprenant au moins une soupape de commande de pression de freinage entre au moins un maître-cylindre et un cylindre de frein de roue, qui est actionné pour fournir une régulation en cas de tendance au blocage, possédant une conduite de retour dans un réservoir de réserve, pour le fluide à pression évacué par au moins une soupape de commande de pression de freinage, possédant une alimentation en énergie extérieure et un arrangement de soupape qui branche le système d'alimentation d'énergie extérieure à au moins la soupape de commande de pression de freinage, dans le cas d'une régulation de pression provenant d'un risque de blocage, caractérisé en ce qu'un dispositif de contrôle (9, 10) est affecté à l'arrangement de soupape (7) et qui provoque une modification de signal si l'arrangement de soupape (7) a provoqué une mise en communication et qu'un circuit de blocage (11) est introduit dans la commande d'au moins une soupape de commande de pression de freinage (5), qui est relié au dispositif de contrôle (9, 10), de telle sorte qu'au moins une commande de la soupape de commande de pression de freinage (5) soit empêchée dans la position faisant chuter la pression, tant que l'arrangement de soupape (7) n'a pas établi une communication.

2. Système de freinage hydraulique de véhicule selon la revendication 1, caractérisé en ce qu'un pressostat (10) est branché comme dispositif de contrôle, en aval de l'arrangement de soupape (7), qui produit la modification de signal, pour une pression prédéterminée et qu'au moins une soupape de commande de pression de freinage (5) est branchée entre le point de branchement du pressostat (10) et au moins une soupape de commande de pression de freinage (5) d'au moins une soupape de dispositif (8) et qui permet l'amenée de fluide sous pression, venant de l'arrangement de soupape (7) et allant à la soupape de commande de pression de freinage (5).

3. Système de freinage hydraulique de véhicule selon la revendication 1, caractérisé en ce qu'un interrupteur de position (7) est affecté comme dispositif de contrôle pour l'arrangement de soupape (7).

4. Système de freinage hydraulique de véhicule selon l'une des revendications 1 à 3, caractérisé en ce que l'arrangement de soupape (7) est une soupape 3/2, qui relie sa sortie au réservoir de réserve (2) quand elle est dans sa position de départ.

5. Système de freinage hydraulique de véhicule selon l'une des revendications 1 à 4, caractérisé en ce que le circuit de blocage (11) est relié supplémentairement à un indicateur de niveau plein (2a ou 2b) du réservoir de réserve (2), pour bloquer le circuit de blocage (11), en cas d'abaissement du niveau de remplissage du réservoir de réserve (2) au dessous d'une valeur prédéterminée.

6. Système de freinage hydraulique de véhicule selon l'une des revendications 1 à 5, caractérisé en ce qu'un pressostat (3a) est affecté au système d'alimentation en puissance extérieure (3) et qui est relié au circuit de blocage (11), pour réaliser son blocage lorsque la production de pression est insuffisante.

**FIG.1**

**FIG.2**